# EUROPÄISCHE PATENTSCHRIFT

(11) **EP 0 770 844 B1**
(45) Veröffentlichungstag und Bekanntmachung des Hinweises auf die Patenterteilung: **07.11.2001**
(21) Anmeldenummer: 96117140.2
(22) Anmeldetag: 25.10.1996
(51) Int. Cl.: F28D 20/02, B60H 1/00

(54) **Latentwärmespeicher**
Latent heat storage
Accumulateur à chaleur latente

(30) Priorität: 27.10.1995 DE 19540015; 20.12.1995 DE 19547619
(43) Veröffentlichungstag der Anmeldung: 02.05.1997
(73) Patentinhaber: Modine Manufacturing Company, Racine, Wisconsin 53403-2552 (US)
(72) Erfinder: Zobel, Werner, 71032 Böblingen (DE); Stolz, Andreas, 70188 Stuttgart (DE)
(74) Vertreter: Wolter, Klaus-Dietrich

(56) Entgegenhaltungen:
- DE-A- 2 551 379
- DE-A- 3 031 947
- DE-A- 4 020 860
- GB-A- 375 521

## Beschreibung

Die Erfindung betrifft einen Latentwärmespeicher, vorzugsweise zur Verwendung in einem Kraftfahrzeug, mit den Merkmalen des Oberbegriffes des Anspruches 1.

Der mit den Merkmalen des Oberbegriffes ausgestattete Latentwärmespeicher ist aus der DE-PS 40 20 860 bekannt.

Bei Latentwärmespeichern hat es sich neuerdings herausgestellt, daß sich während des Betriebes im Innenbehälter, bedingt durch die ständigen Ladungswechsel, die mit Verflüssigung und Verfestigung des Speichermaterials einhergehen, Drücke entwickeln, die sich im Laufe der Zeit bis in unzulässige Bereiche akkumulieren können.

Das an sich bekannte Problem des sich durch die Volumenvergrößerung aufbauenden Druckes, hat man bisher auf unterschiedliche Art gelöst. Beispielsweise hat der aus der DD-PS 249 326 bekanntgewordene Latentwärmespeicher in seinem Innenbehälter einen dehnbaren Bereich, der die wachsenden Drücke aufnehmen kann.

Andere Lösungen sind mit einem sehr stabilen Innenbehälter ausgerüstet, der hohe Drücke kompensieren kann. Dies führt allerdings zu hohem Gewicht und zu höheren Kosten. Zusätzlich wird die einzufüllende Menge des Speichermaterials so bemessen, daß ein Expansionsraum im Innenbehälter frei bleibt, der dann zur Druckentlastung beiträgt. Es ist auch bekannt, das Speichermaterial mit einer solch hohen Temperatur einzufüllen, die im Betrieb nicht mehr erreicht wird, so daß ebenfalls ein Expansionsraum verbleibt. Dies ist jedoch fertigungstechnisch nicht immer von Vorteil und es ist nicht ausgeschlossen, daß durch Störungen die erwartete Höchsttemperatur doch überschritten wird.

Man hat auch einzelne flexible Hüllen vorgeschlagen, in die das Speichermaterial eingefüllt wird, um das Druckproblem zu lösen.

Schließlich hat man auch schon bei Latentwärmespeichern das Druckproblem durch das Vorsehen von Überdruckventilen zu bekämpfen versucht. Bei der aus der DD-PS 269 209 bekannten Lösung handelt es sich um einen Latentwärmespeicher, mit direktem Kontakt zwischen dem Speichermaterial und dem Wärmeträgermedium. Es ist ein Druckrohr vom Expansionsraum ausgehend durch die Isolation geführt und außerhalb des Latentwärmespeichers mit einem oder mehreren Überdruckventilen sowie einem Auffanggefäß für das entweichende Speichermaterial verbunden. Diese Konstruktion verteuert den Latentwärmespeicher wesentlich und hat für bestimmte Anwendungsfalle, beispielsweise im Kraftfahrzeugbereich, untragbare Nachteile, hinsichtlich der Qualität der Wärmeisolation. Der durch das Druckrohr verursachte Wärmeverlust hebt die hochwertigen Eigenschaften, beispielsweise einer Vakuumisolation, nahezu auf. Ferner ist in Kraftfahrzeugen kein Raum zur Unterbringung des Auffanggefäßes mit den dazugehörigen Apparaturen vorhanden. Insgesamt gibt es auf diesem Gebiet eine Vielzahl von Lösungsvorschlägen.

Die Aufgabe der Erfindung besteht darin, mit einfachen und kostengünstigen Mitteln eine zusätzliche Variante zur Druckentlastung in Latentwärmespeichern zur Verfügung zu stellen, die auch die Möglichkeit eröffnet, Latentwärmespeicher nicht mehr mit solch hoher Druckstabilität bauen zu müssen und die hinsichtlich der Begrenzung von Wärmeverlusten wesentlich verbessert ist.

Diese Aufgabe wird in Verbindung mit den Merkmalen des Oberbegriffes erfindungsgemäß in einer ersten Variante dadurch gelöst, daß ein Druckbegrenzungsventil unmittelbar in einem Durchbruch in der Wandung des Innenbehälters abdichtend befestigt ist, so daß das eine Ende des Druckbegrenzungsventils in den Expansionsraum des Innenbehälters ragt und das andere Ende im Sammelraum des Wärmeträgermediums mündet. Das Druckbegrenzungsventil schützt den Innenbehälter und damit den gesamten Latentwärmespeicher vor zu hohen und gegebenenfalls den Latentwärmespeicher zerstörenden Drücken. Die Druckstabilität des Latentwärmespeichers kann zukünftig geringer sein, wodurch billigere Bauweisen moglich werden.

Nach der Variante der Ansprüche 1 bis 6 erfolgt der Druckabbau dadurch, daß bei Überschreitung des zulässigen Druckes der Druckabbau in das Wärmeträgermedium erfolgt. Dabei hat sich herausgestellt, daß die Menge des in das Wärmeträgermedium abgegebenen Stoffes so gering ist, daß eine schädliche, etwa korrosive Wirkung nicht befürchtet werden muß. Der Druckabbau erfolgt in einen Sammelraum des Wärmeträgermediums. Dazu ist ein Druckbegrenzungsventil eingesetzt, daß prinzipiell wie ein Schlauchventil arbeitet, das zwar das Ausströmen aus dem Innenbehälter bei Überschreitung eines bestimmten Druckwertes gestattet, aber mit Sicherheit verhindert, daß das Wärmeträgermedium in den Speicherraum gelangt, bzw. in Kontakt mit dem Speichermaterial kommt.(Anspruch 3) Dabei versteht sich, daß die Elastizität und Vorspannung des Schlauchstückes bestimmen, bei welchem Druckwert das Ventil öffnet.

Gemäß Anspruch 2 ist das Druckbegrenzungsventil direkt in dem Durchbruch der Wandung des Innenbehälters eingelötet. Dabei befindet sich das Ende des Druckbegrenzungsventils mit der zentrischen Bohrung im Expansionsraum, im in Einbaulage obersten Punkt des Innenbehälters und das entgegengesetzte Ende des Druckbegrenzungsventils ragt in den Sammelraum des Wärmeträgermediums. An diesem Ende ist das Schlauchstück über den Ventilkörper geschoben und deckt die an die axiale Bohrung anschließende radiale Bohrung ab. Ein besonderer Vorteil dieser Ventilkonstruktion besteht darin, daß mit einer ausreichend groß gewählten Länge des Schlauchstückes (Abdichtlänge) eine hohe Sicherheit gegen Leckagen erzielt werden kann. Ferner kann durch das Vorsehen einer oder mehrerer Ringe um den Ventilkörper erreicht werden, daß das Schlauchstück im Betrieb nicht vom Ventilkörper herunterrutscht. Je nach den speziellen örtlichen Einbauverhältnissen, kann das Herunterrutschen des Schlauchstückes auch dadurch verhindert werden, daß das Ende des Schlauchstückes beispielsweise an eine Wand des Latentwarmespeichers anstößt. Die spezielle Anordnung des Druckbegrenzungsventils sollte so erfolgen, daß mit einiger Sicherheit verhindert wird, daß Speichermaterial selbst in das Ventil gelangen kann, wodurch die Funktion beeinträchtigt werden könnte. Dazu hat sich herausgestellt, daß eine sowohl zur Horizontalen als auch zur Vertikalen mit einem Winkel von etwa 30° geneigte Anordnung dieser Forderung am besten Rechnung trägt.

Darüber hinaus hat es sich gezeigt, daß der Bohrungsdurchmesser von etwa 2 mm einerseits zu sehr guter Ventilwirkung führt und andererseits das Eindringen von Speichermaterial in das Ventil verhindert. Außerdem kann auch ein abgewinkelter Ventilkörper eingesetzt werden, dessen in den Expansionsraum reichendes Ende in Einbaulage möglichst weit nach oben ragt.

Anspruch 7 enthält eine andere Variante, wonach vorgesehen ist, den Druckabbau an die Atmosphäre zu bewerkstelligen, in dem die Zu-oder die Abflußleitung zur Ableitung des Druckes verwendet wird. Das hat den Vorteil, daß keine zusätzlichen Maßnahmen zur Vermeidung von Wärmebrücken innerhalb der Isolation notwendig sind. Erreicht wird das dadurch, daß das im Durchbruch der Wandung des Innenbehälters placierte Druckbegrenzungsventil auf dem in den Sammelraum ragendem Ende einen Ventilschlauch trägt, der praktisch koaxial durch die Zu-oder die Abflußleitung bis nach außerhalb des Latentwärmespeichers geführt ist. Dort ist der Ventilschlauch beispielsweise durch einen weiteren Durchbruch in der Wandung der Leitung in Verbindung zur Atmosphäre. Bei dem Ventilschlauch handelt es sich um einen Schlauch geringen Durchmessers, der keine erwähnenswerte Strömungsbehinderung für das Wärmeträgermedium darstellt.

Eine weitere Alternative zu den Ansprüchen 1 bis 7 enthält der Anspruch 8. Danach wird der Druck ebenfalls an die Atmosphäre abgeführt, jedoch dadurch, daß mindestens ein weiterer Durchbruch in dem Außenbehälter vorgesehen ist. Das Druckbegrenzungsventil befindet sich in diesem Fall in dem Durchbruch im Außenbehalter. Es ist selbstverständlich, daß durch den Einsatz von Werkstoffen geringer Wärmeleitfähigkeit dafür Sorge getragen wird, daß sich möglichst keine oder nur geringe Wärmebrücken bilden, die die Isolationswirkung beeinträchtigen könnten. Bezüglich der Begrenzung der Wärmeverluste durch Wärmeleitung stellt die Alternative gemäß Anspruch 8 die etwas schlechtere Alternative dar. Sie hat jedoch Vorteile aus fertigungstechnischer Sicht

Die Ansprüche 9 bis 13 betreffen eine nächste eigenständige Variante, die darüber hinaus die Herstellbarkeit und die zuverlässige Funktionsweise des Latentwärmespeichers verbessert.

Dies geschieht dadurch, daß das Druckbegrenzungsventil nicht direkt in dem Durchbruch der Wandung eingesetzt ist, sondern ein als Adapter bezeichnetes Aufnahmeteil zwischengefügt wurde, wobei die Bohrung im Adapter mit der Durchgangsbohrung des Druckbegrenzungsventils in hydraulischer Verbindung ist. Der Adapter muß nicht unmittelbar im Radius der Wandung des Innenbehälters eingebaut, insbesondere eingelötet werden, sondern sitzt im noch ebenen Abschnitt, wobei das eine Ende mit der Bohrung in den Expansionsraum ragt. Das ist fertigungstechnisch nicht nur einfacher zu bewerkstelligen sondern verbessert auch die Lötqualität. Wesentlich vereinfacht wird der Fertigungsprozeß auch dadurch, daß das Druckbegrenzungsventil nicht mehr fest eingelötet ist sondern nur mittels einer Dichtung abgedichtet in der seitlich angeordneten Buchse des Adapters steckt. Die seitlich angeordnete Buchse gewährleistet, daß der Adapter optimal so angeordnet und eingelötet werden kann, daß sein eines Ende mit der Bohrung den obersten Punkt im Expansionsraum erreicht, ohne daß sich die Lötposition verschlechtert. Die Bohrung erstreckt sich von diesem obersten Punkt bis in das Innere der Buchse. Die Durchgangsbohrung durch den Ventilkörper ist mit der zuvor genannten Bohrung in hydraulischer Verbindung, da der Stutzen des Ventilkörpers sich in der Buchse des Adapters befindet.

Die Ausbildung des Druckbegrenzungsventils selbst, gemäß den Ansprüchen 11 bis 13, führt ebenfalls zu höherer Zuverlässigkeit der Funktionsweise, insbesondere deshalb, weil die Kontaktfläche zwischen der Ventilkappe und dem Ventilkörper wesentlich reduziert wurde, was zu geringeren Adhäsionskräften zwischen Ventilkappe und Ventilkörper führt und damit zu einer größeren Öffnungssicherheit bei Überdruck. Der am Bund des Ventilkörpers, vorzugsweise durch Anpressen oder Anstemmen, befestigte Ventildeckel hat eine Schutzfünktion gegen Abheben oder Abrutschen der Ventilkappe, im Fall von unvorhergesehen hohem Druck.

Nachfolgend wird die Erfindung in Ausführungsbeispielen erläutert, wozu auf die Zeichnungen Bezug genommen wird.

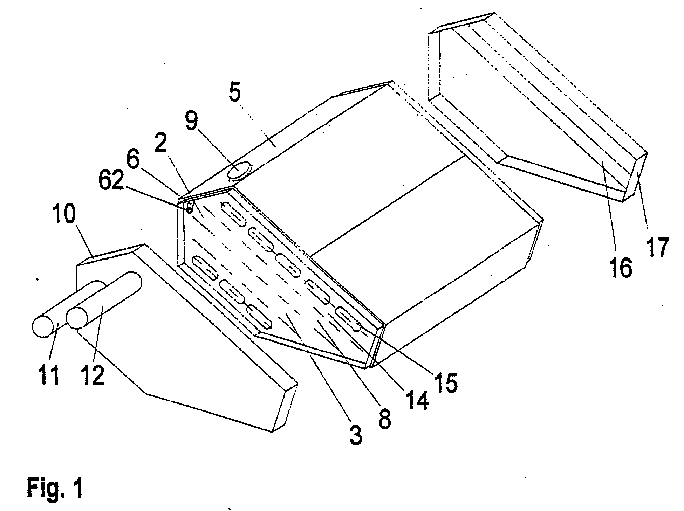

Es zeigen
- Fig. 1: Prinzipdarstellung des Latentwärmespeichers mit Druckbegrenzungsventil
- Fig. 2: Ausschnitt, der das Druckbegrenzungsventil zwischen Expansionsraum des Innenbehälters und Sammelraum des Wärmeträgermediums zeigt.
- Fig.3: Ausführungsvariante mit Druckabbau in die Atmosphäre über einen zweiten Durchbruch im Außenbehälter
- Fig. 4: Ausführungsvariante mit einem Ventilschlauch in der Zu-oder Abflußleitung
- Fig. 5: Rohrboden eines Latentwärmespeichers mit eingebautem Adapter
- Fig 6: Adapter als Einzelteil in mehreren Ansichten
- Fig. 7: Druckbegrenzungsventil der Adapter-Variante im Teilschnitt

Die Fig. zeigt den Latentwärmespeicher, der zum Einbau in ein Kraftfahrzeug vorgesehen ist und bei dem das Kühlwasser des Motors als Wärmeträgermedium verwendet wird. Der Latentwärmespeicher besteht aus einem Außenbehälter **5**, der den Innenbehälter **3** einschließt. Der Raum zwischen dem Innenbehälter **3** und dem Außenbehälter **5** ist ein Vakuumisolationsraum, der mit einem geeigneten Isolationspulver befüllt ist, wozu die Befüllöffnung **9** dient, die danach verschlossen wird. Der Latentwarmespeicher ist mit noch geöffnetem Deckel **10** gezeichnet, an dem die Zu - und Abflußleitungen **11**;**12** angeordnet sind. Durch den geöffneten Deckel **10** ist der Blick frei, auf die Wandung **2** des Innenbehälters **3,** aus der oben das Ende **62** des Druckbegrenzungsventils **6** in den Sammelraum **8** des Kühlwassers ragt. Die Wandung **2** des Innenbehälters **3** ist als Rohrboden **14** ausgeführt, der eine Vielzahl länglicher Öffnungen aufweist, in denen die Enden der Flachrohre **15** fest und abdichtend eingelötet sind. Die gleiche Gestaltung ist am anderen nicht gezeichneten Ende des Latentwärmespeichers vorhanden. Bei der Beladung des Latentwärmespeichers strömt das heiße Kühlwasser durch die Zuflußleitung **11** in den Sammelraum **8,** um sich dort auf die Flachrohre **15** zu verteilen. Das Kühlwasser durchströmt die den Innenbehälter **3** durchsetzenden Flachrohre **15** in Richtung auf das andere Ende des Latentwärmespeichers, wird durch eine Trennwand **16** im Deckel **17** umgelenkt und strömt zurück. Da sich im Deckel **10** ebenfalls eine Trennwand **16** befindet, kann eine mäanderartige Durchströmung des Latentwärmespeichers erfolgen, die eine gute Wärmeaufnahme bzw. Wärmeabgabe gewährleistet. Über die Abflußleitung **12** strömt das Kühlwasser zurück in den Kühlkreislauf.

Der sich beim Betrieb des Latentwärmespeichers aufbauende unzulässig hohe Druck wird durch das Druckbegrenzungsventil **6** abgebaut und in den Sammelraum **8** des Kühlwassers abgeleitet

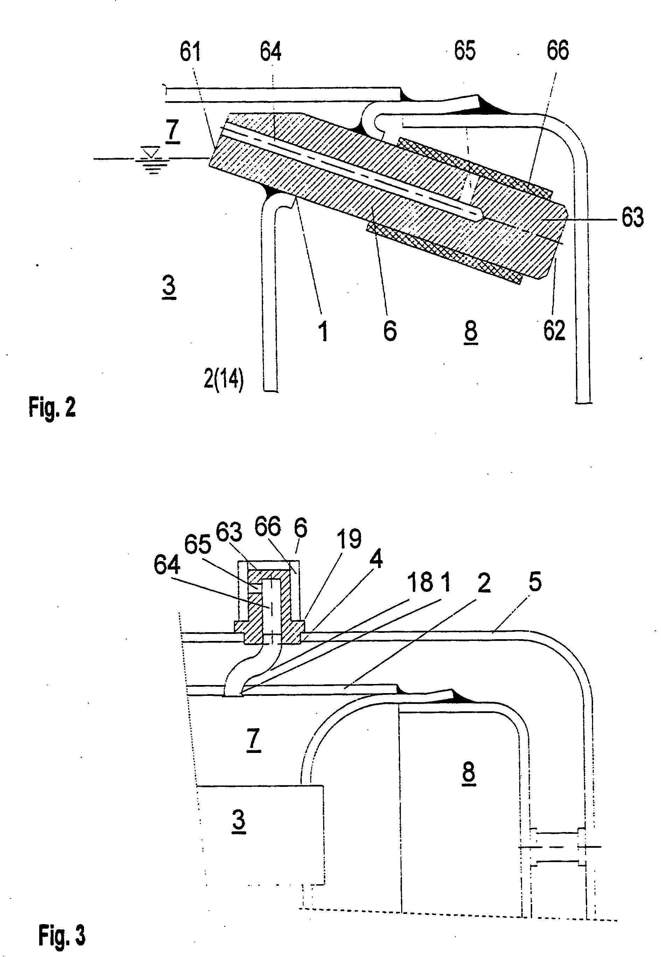

Die Fig. 2 zeigt das eingelötete Druckbegrenzungsventil **6** in der Wandung **2,** die durch den Rohrboden **14** dargestellt ist. In dieser Darstellung wurde zur Vereinfachung der Außenbehälter **5** und der Isolationsraum weggelassen. Die Anordnung ist im höchsten Punkt des Innenbehälters **3** vorgesehen und ist so ausgeführt, daß das Ende **61** des Druckbegrenzungsventils **6** mit der zentrischen Bohrung **64** in den Expansionsraum **7** des Innenbehälters **3** ragt. Dieser befindet sich ausreichend oberhalb des Niveaus des Speichermaterials.

Das Druckbegrenzungsventil **6** ist mit etwa 30° geneigt zur Horizontalen eingebaut. Das andere Ende **62** des Druckbegrenzungsventils **6** befindet sich im Sammelraum **8** des Kühlwassers. Die Fig. 2 zeigt ferner, daß etwa am Ende der zentrischen 2 mm - Bohrung **64** eine radiale Bohrung **65** eingebracht ist, die zum Umfang des Metallzylinders **63** führt.

Von diesem Ende **62** des Druckbegrenzungsventils **6** ist ein Schlauchstück **66** über den Umfang des Metallzylinders **63** geschoben, wodurch die Funktionsweise eines Schlauchventiles erreicht ist. Die Elastizität des Schlauchstückes **66** bestimmt, bei welchem Druck der Druckabbau beginnt. Dies ist einleuchtend bereits bei einem derartigen Druck der Fall, bei dem noch keine schädlichen Wirkungen auf den Innenbehälter **3** oder den Latentwärmespeicher auftreten. Außerdem verhindert das Schlauchstück **66,** daß das Kühlwasser in den Innenbehälter **3** eindringen kann. In diesem Ausführungsbeispiel wird eventuell auftretendes axiales Wandern des Schlauchstückes **66** auf dem Metallzylinder **63** durch die gezeigte spezielle Einbaulage verhindert, weil das Schlauchstück **66** an eine Wand des Latentwärmespeichers anstößt. Als Alternative hierzu könnte auch ein Ring auf dem Metallzylinder **63** vorgesehen werden, über den das Schlauchstück **66** geschoben wird.

Die Fig. 3 zeigt eine von mehreren möglichen Varianten, bei der der Druckabbau an die Atmosphäre erfolgt. Dazu ist sowohl in der Wandung **2** des Innenbehälters **3** als auch in der Wandung des Außenbehälters **5** ein Durchbruch **1 ; 4** vorgesehen. Mittels einer kurzen Rohrleitung **18,** die abdichtend in dem Durchbruch **1** befestigt ist, wird der Isolationsraum überbrückt. Das Druckbegrenzungsventil **6** befindet sich fest eingelötet in dem Durchbruch **4** in der Wandung des Außenbehälters **5.** Die Rohrleitung **18** mündet in dem Druckbegrenzungsventil **6.** Das Druckbegrenzungsventil **6** kann identisch mit dem bereits beschriebenen Ventil ausgeführt sein. Zusätzlich kann ein Bund **19** am Metallzylinder **63** vorhanden sein, der eine bessere Lötverbindung erlaubt.

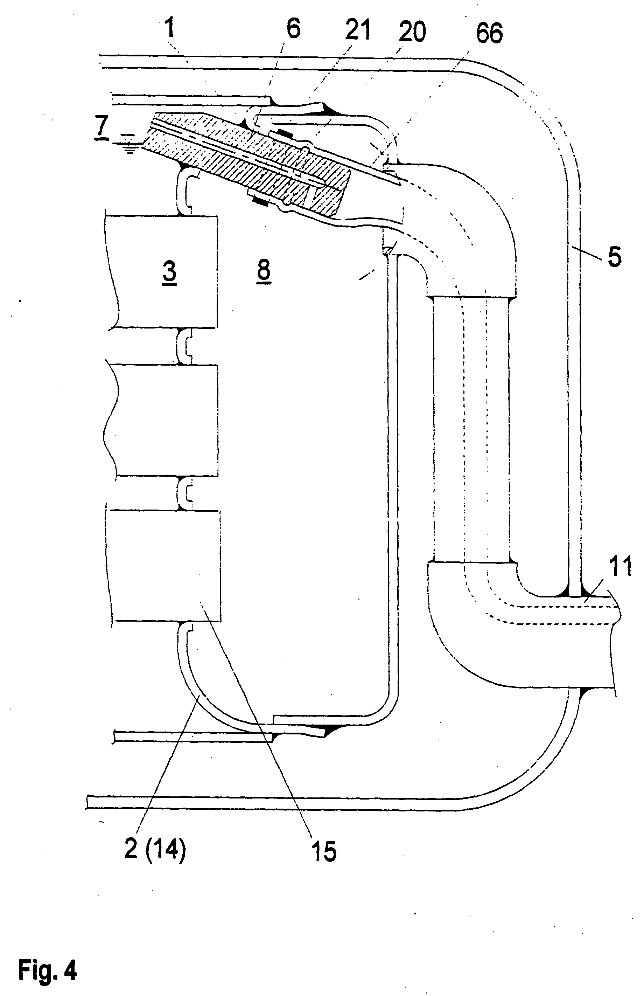

Die Fig. 4 stellt ein Ausführungsbeispiel mit einem durch die Zuflußleitung **11** führenden Ventilschlauch **66** dar. Das Druckbegrenzungsventil **6** und der Ventilschlauch **66** sind vergrößert dargestellt. Tatsächlich ist der Durchmesser des Ventilschlauches **66** so gering, daß keine bemerkbare Strömungsbehinderung eintritt Das Druckbegrenzungsventil **6** ist in dem Durchbruch **1** der Wandung **2** des Innenbehälters **3** eingelötet Die Wandung **2** des Innenbehälters **3** ist als Rohrboden **14** ausgebildet, in dem die Enden von drei Flachrohren **15** angedeutet sind Auf das in den Sammelraum **8** ragende mit einem Ring **20** versehene Ende des Druckbegrenzungsventils **6** ist der Ventilschlauch **66** geschoben, der durch die Öffnung in der Zuflußleitung **11** in dieselbe eintritt und sich darin bis nach außerhalb des Latentwärmespeichers erstreckt. Zur zusätzlichen Sicherung des Ventilschlauches **66** auf dem Druckbegrenzungsventil **6** ist eine Schlauchschelle **21** vorgesehen.

Die Zuflußleitung **11** verläßt den Latentwärmespeicher durch einen Durchbruch im Außenbehälter **5** und ist selbstverständlich fest und abdichtend eingelötet Das entgegengesetzte Ende des Druckbegrenzungsventils **6** befindet sich im Expansionsraum **7**, im obersten Punkt des Innenbehälters **3**. Der Ventilschlauch **66** tritt außerhalb des Latentwärmespeichers, beispielsweise durch einen Wandungsdurchbruch, an die Atmosphäre, was im Bild nicht extra dargestellt wurde.

Zur besseren Unterscheidung wurden bei dem nachfolgenden Ausführungsbeispiel, bei dem das Druckbegrenzungsventil **106** nicht direkt in einem Durchbruch **101** der Wandung **102** eingesetzt wurde sondern in einem Adapter **100** sitzt, Bezugszeichen verwendet, die bei 100 beginnen. Die gleichen Elemente haben dabei um 100 erhöhte Bezugszeichen.

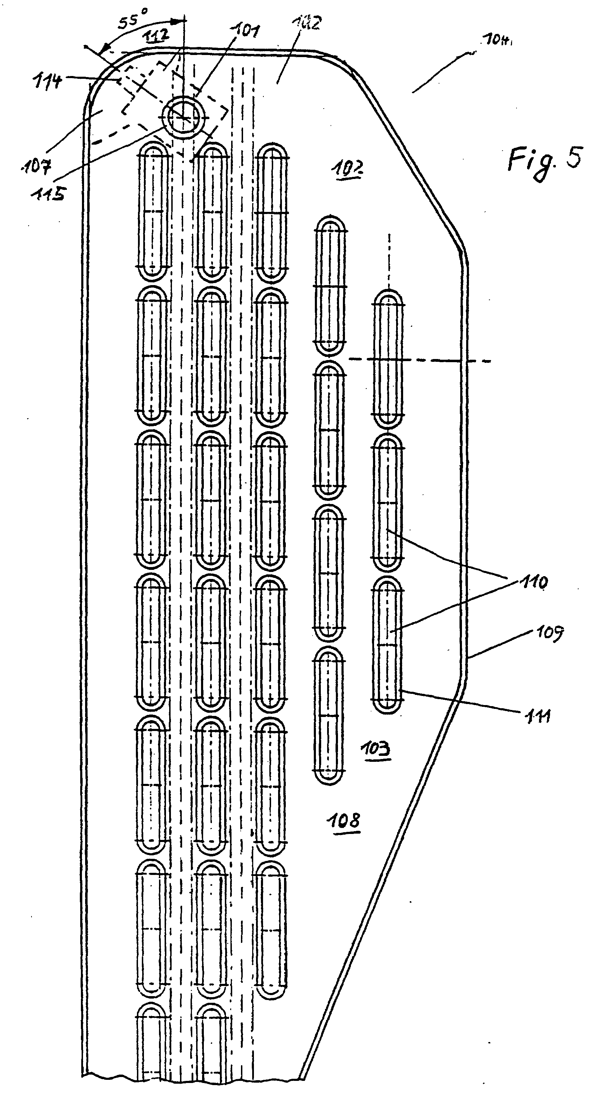

Die Fig. 5 stellt auch die Seitenansicht des Latentwärmespeichers dar, bei dem der Isolationsraum und der Außenbehalter **105** nicht gezeichnet ist. Ferner fehlt der den Sammelraum **108** abschließende Deckel, so daß der Blick frei ist, auf den Rohrboden **104,** der, als Teil des Innenbehälters **103,** die Querschnittsform des Latentwärmespeichers aufweist. Der untere zusammenlaufende Bereich des Latentwärmespeichers beziehungsweise des Rohrbodens **104** wurde abgeschnitten. Der nicht gezeichnete Deckel ist mit dem aufgerichteten Rand **109** des Rohrbodens **104** über den gesamten Umfang durch Lötverbindung verbunden. In dem Rohrboden **104** befinden sich eine Vielzahl länglicher Öffnungen **110,** die einen zur Ansichtsseite hin durchgezogenen Rand **111** aufweiseen. Dieser Rand **111** dient der löttechnischen Verbindung der nicht gezeichneten Flachrohre in den Öffnungen **110.**

Durch diese Flachrohre strömt das Wärmeträgermedium. Die Flachrohre sind mit ihrem entgegengesetzten Ende auf gleicher Weise in den Öffnungen **110** des anderen Rohrbodens **104** eingesetzt. Zwischen den Flachrohren befindet sich das Speichermaterial, ein geignetes Salz, das durch Wechsel seines Aggregatzustandes von fest nach flüssig und umgekehrt, Wärme an das Wärmeträgermedium abgibt oder Wärme aufnimmt und speichert. Da der Latentwärmespeicher im gezeigten Ausführungsbeispiel eine Einbaulage von etwa 55° besitzt, wurde der Adapter **100** oben mit diesem Winkel **112** in einer Öffnung **101** der Wandung **102** des Innenbehälters **103** beziehungsweise des Rohrbodens **104** eingesetzt.

Der Adapter **100** befindet sich auf der Behälterinnenseite, weshalb seine Außenkonturen gestrichelt eingezeichnet sind. Das eine Ende **114** des Adapters **100** mit der Bohrung **113** befindet sich im in Einbaulage obersten Punkt des Innenbehälters **103,** dem Expansionsraum **107.** Der Adapter **100** weist eine seitlich angeformte Buchse **115** auf, mit der dieser in der Öffnung **101** des Rohrbodens **104** eingelötet ist

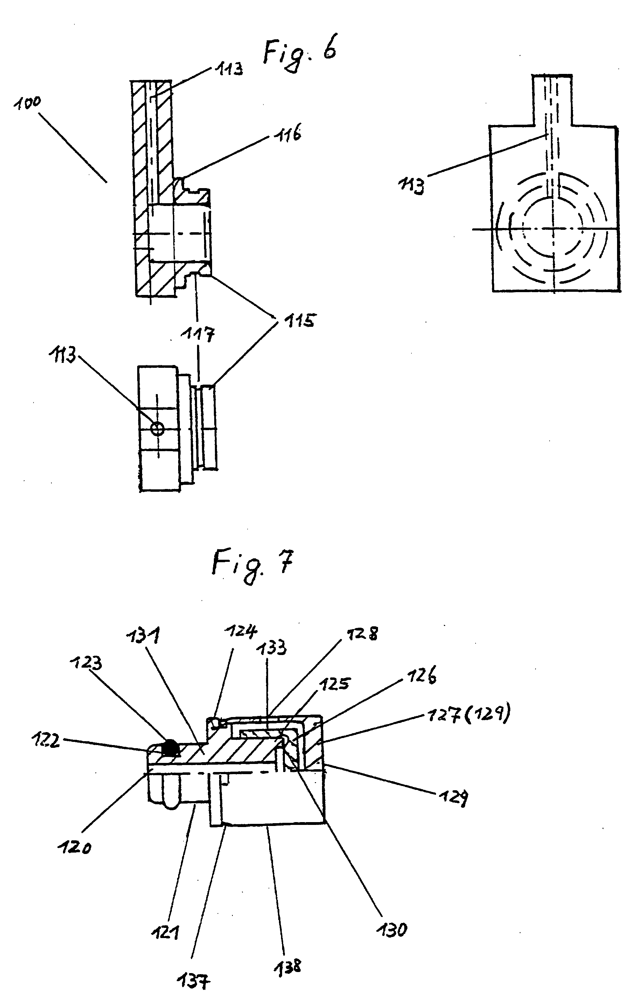

Die Einzelheiten des Adapters **100** gehen aus der Fig. 6 hervor Die Bohrung **113** mündet im Inneren der Buchse **115.** Die Buchse **115** nimmt das einen Stutzen **121** mit einer Durchgangsbohrung **120** aufweisende Druckbegrenzungsventil **106** auf, wie weiter unten noch beschrieben ist, wodurch die hydraulische Verbindung vom Innenbehälter **103** in den Sammelraum **108** zum Zweck der Druckentlastung sichergestellt ist. Die Buchse **115** besitzt ferner am Umfang einen Absatz **116** und eine umlaufende Nut **117,** was der korrekten Positionierung und dem abdichtenden Löten dient

Die Einzelheiten des Druckbegrenzungsventils **106** sind in Fig. 7 abgebildet. Das Druckbegrenzungsventil **106** weist einen Ventilkörper **131** auf, der an einer Seite einen Stutzen **121** mit einer umlaufenden Nut **122** und einen Dichtring **123** besitzt, womit das Ventil **106** in die Buchse **115** des Adapters **100** einsetzbar ist. Eine zentrische Durchgangsbohrung **120** durchsetzt den Ventilkörper **131** und mündet am anderen Ende **125** an dem ein umlaufender überstehender Rand **130** eingearbeitet ist Dieses Ende **125** des Ventilkörpers **131** ist von einer Ventilkappe **126** aus gummielastischem Werkstoff eingeschlossen. Die Ventilkappe **126** besteht aus einem Bodenteil **132** und einem Mantelteil **133,** so daß eine etwa topfähnliche Konfiguration entsteht. Auf der Innenseite **134** der Ventilkappe **126** befinden sich Kanäle **135,** die sich bis zu dem die Mantelfläche **133** abschließenden Ringwulst **136** erstrecken. Durch diese Ausbildung ist gewähleistet, daß bei einem festgelegten Öffnungsdruck der Ringwulst **136** von dem Ventilkörper **131** abhebt und die Druckentlastung erfolgt. Adhäsionskräfte zwischen Ventilkappe **126** und Ventilkörper **131,** die die Öffnungssicherheit beeinflussen, sind nahezu ausgeschaltet.

Die Ventilkappe **126** wird von einem gleiche Form aufweisenden Ventildeckel **127** eingeschlossen. Der Ventildeckel **127** ist mit dem Rand **137** seiner Mantelfläche **138** an dem Bund **124** des Ventilkörpers **131** festgelegt. Diese Verbindung kann durch punktweises Anpressen erfolgen. Die Mantelfläche **138** besitzt ferner radiale Bohrungen **128**, die dem Durchtritt des ausströmenden Mediums dienen.

### Liste der verwendeten Bezugszeichen

- 1: Durchbruch, Bohrung in Wandung Innenbehälter
- 2: Wandung des Innenbehälters
- 3: Innenbehälter
- 4: Durchbruch im Außenbehälter
- 5: Außenbehälter
- 6: Druckbegrenzungsventil
- 7: Expansionsraum
- 8: Sammelraum
- 9 10: Deckel
- 11: Zuflußleitung
- 12: Abflußleitung
- 13 14: Rohrboden
- 15: Flachrohre
- 16: Trennwand
- 17: Deckel (andere Seite)
- 18: Rohrleitung
- 19: Bund
- 20: Ring
- 21: Schlauchschelle

- 61: Ende des Druckbegrenzungsventils 6
- 62: anderes Ende von 6
- 63: Metallzylinder
- 64: Bohrung
- 65: radiale Bohrung
- 66: Schlauchstück; Ventilschlauch

- 100: Adapter
- 101: Durchbruch; Bohrung in Wandung Innenbehälter
- 102: Wandung des Innenbehälters
- 103: Innenbehälter
- 104: Rohrboden
- 105: Außenbehälter
- 106: Druckbegrenzungsventil
- 107: Expansionsraum
- 108: Sanunelraum
- 109: Rand, Rohrboden
- 110: Öffnungen für Flachrohre
- 111: Rand um Öffnungen 10
- 112: Einbauwinkel
- 113: Bohrung im Adapter
- 114: Ende des Adapters im Expansionsraum
- 115: Buchse am Adapter
- 116: Absatz an Buchse
- 117: Nut in Buchse
- 120: Durchgangsbohrung in Ventil 106
- 121: Stutzen
- 122: Nut
- 123: Runddichtring
- 124: Bund
- 125: Ende des Ventilkörpers im Sammelraum
- 126: Ventilkappe, Gummi
- 127: Ventildeckel Metall
- 128: Bohrungen im Ventildeckel 127
- 129: Boden, Ventildeckel
- 130: Rand am Ende 125
- 131: Ventilkörper
- 132: Boden, Ventilkappe 126
- 133: Mantel, Ventilkappe
- 134: Innenseite Ventilkappe
- 135: Kanäle Ventilkappe
- 136: Ringwulst Ventilkappe
- 137: Rand Ventildeckel
- 138: Mantel Ventildeckel

## Patentansprüche

1. Latentwärmespeicher, bestehend aus einem Innenbehälter (3), in dem sich das Speichermaterial und ein Expansionsraum (7) befinden und der vom Wärmeträgermedium durchströmt wird ohne in direkten Kontakt mit dem Speichermaterial zu gelangen, derart, daß das Wärmeträgermedium durch eine Anzahl von den Innenbehälter (3) durchsetzenden Rohren (15) strömt, die an beiden Enden in je einen Sammelraum (8) münden und mit einem den Innenbehälter (3) unter Bildung eines Isolationsraumes einschließenden Außenbehälter (5), der von einer Zu - und einer Abflußleitung (11; 12) durchbrochen ist,
**dadurch gekennzeichnet, daß**
ein Druckbegrenzungsventil (6) unmittelbar in einem Durchbruch (1) der Wandung (2) des Innenbehälters (3) abdichtend befestigt ist, so daß das eine Ende (61) des Druckbegrenzungsventils (6) in den Expansionsraum (7) des Innenbehälters (3) ragt und das andere Ende (62) im Sammelraum (8) des Wärmeträgermediums mündet.

2. Latentwärmespeicher nach Anspruch 1, **dadurch gekennzeichnet, daß** das Druckbegrenzungsventil (6) in dem Durchbruch (1) der Wandung (2) des Innenbehälters (3) eingelötet ist.

3. Latentwärmespeicher nach den Ansprüchen 1 und 2, **dadurch gekennzeichnet, daß** das Druckbegrenzungsventil (6) aus einem Metallzylinder (63), vorzugsweise aus Aluminium, mit einer zentrischen Bohrung (64) und einer anschließenden radialen Bohrung (65) gebildet ist und auf dem Ende (62) des Metallzylinders (63) mit der radialen Bohrung (65) ein aufgeschobenes Schlauchstück (66) aufweist.

4. Latentwärmespeicher nach Anspruch 3, **dadurch gekennzeichnet, daß** der Bohrungsdurchmesser etwa 2 mm beträgt.

5. Latentwärmespeicher nach einem der vorstehenden Ansprüche, **dadurch gekennzeichnet, daß** der den Ventilkörper bildende Zylinder (63) abgewinkelt ist, wobei das abgewinkelte Stück im Expansionsraum (7), im in Einbaulage des Speichers obersten Punkt, angeordnet ist.

6. Latentwärmespeicher nach einem der vorstehenden Ansprüche, **dadurch gekennzeichnet, daß** der Ventilkörper (63) am Umfang einen oder mehrere Ringe (20) aufweist, die das Herunterrutschen bzw. das axiale Verschieben des Schlauchstückes (66) verhindern.

7. Latentwärmespeicher nach einem der vorstehenden Ansprüche, **dadurch gekennzeichnet, daß** das auf das in den Sammelraum (8) ragende Ende (62) des Druckbegrenzungsventils (6) aufgeschobene Schlauchstück (66) ein verlängerter Ventilschlauch ist, der durch die Zu-oder die Abflußleitung (11; 12) bis nach außerhalb des Latentwärmespeichers geführt und dort in Verbindung zur Atmosphäre ist.

8. Latentwärmespeicher bestehend aus einem Innenbehälter (3), in dem sich das Speichermaterial und ein Expansionsraum (7) befinden und der vom Wärmeträgermedium durchströmt wird ohne in direkten Kontakt mit dem Speichermaterial zu gelangen, derart, daß das Wärmeträgermedium durch eine Anzahl von den Innenbehälter (3) durchsetzenden Rohren (15) strömt, die an beiden Enden in je einen Sammelraum (8) münden, und mit einem den Innenbehälter (3) unter Bildung eines Isolationsraumes einschließenden Außenbehälter (5), der von einer Zu - und einer Abflußleitung (11; 12) durchbrochen ist, **dadurch gekennzeichnet, daß**
ein Durchbruch (1) im Innenbehälter (3) und ein weiterer Durchbruch (4) im Außenbehälter (5) vorgesehen und durch eine Leitung (18) verbunden sind, wobei ein Druckbegrenzungsventil (6) unmittelbar in dem Durchbruch (4) eingelötet ist, so daß der Abbau des Druckes an die Atmosphäre durchführbar ist.

9. Latentwärmespeicher, bestehend aus einem Innenbehälter (103), in dem sich das Speichermaterial und ein Expansionsraum (107) befinden und der vom Wärmeträgermedium durchströmt wird ohne in direkten Kontakt mit dem Speichermaterial zu gelangen, derart, daß das Wärmeträgermedium durch eine Anzahl von den Innenbehälter (103) durchsetzenden Rohren (15) strömt, die an beiden Enden in einen Sammelraum (108) münden, und mit einem den Innenbehälter (103) unter Bildung eines Isolationsraumes einschließenden Außenbehälter (105), der von einer Zu - und einer Abflußleitung (11; 12) durchbrochen ist
**dadurch gekennzeichnet, daß**
in einem Durchbruch (101) der Wandung (102) des Innenbehälters (103) ein eine Bohrung (113) aufweisender Adapter (100) fügetechnisch und abdichtend eingesetzt ist, der den eine Durchgangsbohrung (120) aufweisenden Stutzen (121) des Druckbegrenzungsventils (106) abdichtend aufnimmt, so daß die Durchgangsbohrung (120) und die Bohrung (113) hydraulisch verbindbar sind.

10. Latentwärmespeicher nach Anspruch 9, **dadurch gekennzeichnet, daß** der Adapter (100) sich auf der Behälterinnenseite befindet und mit dem eine Bohrung (113) aufweisendem Ende (114) in den Expansionsraum (107) ragt und daß der Adapter (100) eine seitlich angeformte Buchse (115) besitzt, in der die Bohrung (113) mündet und die in dem Durchbruch (101) der Wandung (102) angeordnet ist, die den Stutzen (121) des in den Sammelraum (108) ragenden Druckbegrenzungsventils (106) aufnimmt.

11. Latentwärmespeicher nach den Ansprüchen 9 und 10, **dadurch gekennzeichnet, daß** das Druckbegrenzungsventil (106) am Umfang des Stutzens (121) eine Nut (122) mit einem Runddichtring (123) aufweist und anschließend einen Bund (124) der einerseits als Anschlag an die Buchse (115) dient und andererseits als Aufnahme und Befestigung eines die auf dem anderen Ende (125) des Stutzens (121) vorgesehene Ventilkappe (126) einschließenden Ventildeckels (127) dient, besitzt.

12. Latentwärmespeicher nach einem der vorstehenden Ansprüche 9 bis 11, **dadurch gekennzeichnet, daß** die aus gummielastischem Werkstoff bestehende topfartige Ventilkappe (126) das Ende (125) des Stutzens (121) mit der Durchgangsbohrung (120) umfaßt und, daß der Ventildeckel (127) topfähnlich ausgeformt ist, radiale Bohrungen (128) aufweist und die Ventilkappe (126) in sich aufnehmend an dem Bund (124) befestigt ist.

13. Latentwärmespeicher nach einem der vorstehenden Ansprüche 9 bis 12, **dadurch gekennzeichnet, daß** das stirnseitige Ende (125) des Stutzens (121) einen axial überstehenden Rand (130) aufweist, und auf der Innenseite( 134) der aus Boden (132) - und Mantelfläche (133) gebildeten Ventilkappe (126) sternförmig verlaufende Kanäle (135) eingearbeitet sind, die vom Zentrum bis zu einem die Mantelfäche (133) abschließenden Ringwulst (136) reichen

## Claims

1. Latent heat store, comprising an inner vessel (3), which contains the storage material and an expansion space (7) and through which the heat-transfer medium flows without coming into direct contact with the storage material, in such a manner that the heat-transfer medium flows through a number of tubes (15) which pass through the inner vessel (3) and at both ends open out into in each case one collection space (8), and having an outer vessel (5), which encloses the inner vessel (3) so as to form an insulation space and through which a feed line (11) and an outlet line (12) pass, **characterized in that** a pressure relief valve (6) is secured directly in an aperture (1) in the wall (2) of the inner vessel (3) forming a seal, so that one end (61) of the pressure relief valve (6) penetrates into the expansion space (7) of the inner vessel (3) and the other end (62) opens out in the collection space (8) for the heat-transfer medium.

2. Latent heat store according to Claim 1, **characterized in that** the pressure relief valve (7) is soldered into the aperture (1) in the wall (2) of the inner vessel (3).

3. Latent heat store according to Claims 1 and 2, **characterized in that** the pressure relief valve (6) is formed from a metal cylinder (63), preferably made from aluminium, with a central bore (64) and an adjoining radial bore (65) and has a piece of hose (66) pushed onto that end (62) of the metal cylinder (63) which has the radial bore (65).

4. Latent heat store according to Claim 3, **characterized in that** the diameter of the bore is approximately 2 mm.

5. Latent heat store according to one of the preceding claims, **characterized in that** the cylinder which forms the valve body is angled off, the angled-off piece being arranged in the expansion space (7), in the uppermost point when the store is in its installed position.

6. Latent heat store according to one of the preceding claims, **characterized in that** the valve body (63), on its circumference, has one or more rings (20) which prevent the piece of hose (66) from slipping down or moving in the axial direction.

7. Latent heat store according to one of the preceding claims, **characterized in that** the piece of hose (66) which has been pushed onto that end (62) of the pressure relief valve (6) which projects into the collection space (8) is an extended valve hose which is guided through the feed line (11) or the outlet line (12) to outside the latent heat store, where it is in communication with the atmosphere.

8. Latent heat store, comprising an inner vessel (3), which contains the storage material and an expansion space (7) and through which the heat-transfer medium flows without coming into direct contact with the storage material, in such a manner that the heat-transfer medium flows through a number of tubes (15) which pass through the inner vessel (3) and at both ends open out into in each case one collection space (8), and having an outer vessel (5), which encloses the inner vessel (3) so as to form an insulation space and through which a feed line (11) and an outlet line (12) pass, **characterized in that** an aperture (1) in the inner vessel (3) and a further aperture (4) in the outer vessel (5) are provided and are connected by a line (18), a pressure relief valve (6) being soldered directly into the aperture (4), so that it is possible to reduce the pressure by releasing it to the atmosphere.

9. Latent heat store, comprising an inner vessel (103), which contains the storage material and an expansion space (107) and through which the heat-transfer medium flows without coming into direct contact with the storage material, in such a manner that the heat-transfer medium flows through a number of tubes (15) which pass through the inner vessel (103) and at both ends open out into in each case one collection space (108), and having an outer vessel (105), which encloses the inner vessel (103) so as to form an insulation space and through which a feed line (11) and an outlet line (12) pass, **characterized in that** an adapter (100), which has a bore (113), is fitted using a joining technique and forming a seal in an aperture (101) in the wall (102) of the inner vessel (103), this adapter accommodating, in a sealed manner, the connection piece (121), which has a passage bore (120), of the pressure relief valve (106), so that the passage bore (120) and the bore (113) can be hydraulically connected.

10. Latent heat store according to Claim 9, **characterized in that** the adapter (100) is situated on the vessel inner side and, by means of the end (114) which has a bore (113) penetrate into the expansion space (107) and **in that** the adapter (100) has a bush (115) welded on the side, in which the bore (113) opens out and which is arranged in the aperture (101) in the wall (102) which accommodates the connection piece (121) of the pressure relief valve (106) projecting into the collection space (108).

11. Latent heat store according to Claims 9 and 10, **characterized in that** the pressure relief valve (107), on the circumference of the connection piece (121), has a groove (122) with a round sealing ring (123) and then a collar (124), which serves on the one hand as a stop against the bush (115) and on the other hand to receive and secure a valve cover (127) which encloses the valve cap (126) provided on the other end of the connection piece (121).

12. Latent heat store according to one of the preceding Claims 9 to 11, **characterized in that** the cup-shaped valve cap (126), which consists of elastomeric material, surrounds the end (125) of the connection piece (121) with the passage bore (120), and **in that** the valve cover (127) is formed so that it is similar to a cup and has radial bores (128), and the valve cap (126) is attached to the collar (124) so that it is fully accommodated.

13. Latent heat store according to one of the preceding Claims 9 to 12, **characterized in that** the end (125) of the connection piece (121) has an axially projecting rim (130), and channels (135) which run in a star shape are machined into the inner side (134) of the valve cap (126) formed from the base surface (132) and lateral surface (133), these channels extending from the centre to an annular bead (136) which closes off the lateral surface (133).

## Revendications

1. Accumulateur de chaleur latente, se composant d'une enceinte intérieure (3), dans laquelle se trouvent le matériau d'accumulation et une chambre d'expansion (7) et qui est parcourue par le fluide porteur de chaleur sans venir en contact direct avec le matériau d'accumulation, de manière telle que le fluide porteur de chaleur circule à travers un certain nombre de tubes (15) traversant l'enceinte intérieure (3), qui débouchent à chacune de leurs deux extrémités dans une chambre collectrice (8) et avec une enceinte extérieure (5) entourant l'enceinte intérieure (3) en formant une chambre isolante, qui est percée par une conduite d'arrivée et une conduite d'évacuation (11; 12), **caractérisé en ce qu'**une soupape de limitation de pression (6) est disposée de façon étanche directement dans une ouverture (1) de la paroi (2) de l'enceinte intérieure (3), de telle manière qu'une première extrémité (61) de la soupape de limitation de pression (6) pénètre dans la chambre d'expansion (7) de l'enceinte intérieure (3) et que l'autre extrémité (62) débouche dans la chambre collectrice (8) du fluide porteur de chaleur.

2. Accumulateur de chaleur latente suivant la revendication 1, **caractérisé en ce que** la soupape de limitation de pression (6) est brasée dans l'ouverture (1) de la paroi (2) de l'enceinte intérieure (3).

3. Accumulateur de chaleur latente suivant les revendications 1 et 2, **caractérisé en ce que** la soupape de limitation de pression (6) est formée d'un cylindre métallique (63), de préférence en aluminium, avec un alésage central (64) et un alésage radial (65) s'y raccordant et présente un morceau de tuyau flexible (66) enfilé sur l'extrémité (62) du cylindre métallique (63) avec l'alésage radial (65).

4. Accumulateur de chaleur latente suivant la revendication 3, **caractérisé en ce que** le diamètre des alésages est d'environ 2 mm.

5. Accumulateur de chaleur latente suivant l'une quelconque des revendications précédentes, **caractérisé en ce que** le cylindre (63) formant le corps de soupape est coudé, la partie coudée étant disposée dans la chambre d'expansion (7), au point le plus haut de l'accumulateur en position de montage.

6. Accumulateur de chaleur latente suivant l'une quelconque des revendications précédentes, **caractérisé en ce que** le corps de soupape (63) présente en périphérie un ou plusieurs anneaux (20), qui empêchent l'arrachement, respectivement le glissement axial du morceau de tuyau flexible (66).

7. Accumulateur de chaleur latente suivant l'une quelconque des revendications précédentes, **caractérisé en ce que** le morceau de tuyau flexible (66) enfilé sur l'extrémité (62) de la soupape de limitation de pression (6) pénétrant dans la chambre collectrice (8) est un tuyau de soupape prolongé, qui est mené à travers la conduite d'arrivée ou d'évacuation (11; 12) jusqu'à l'extérieur de l'accumulateur de chaleur latente et y est en communication avec l'atmosphère.

8. Accumulateur de chaleur latente, se composant d'une enceinte intérieure (3), dans laquelle se trouvent le matériau d'accumulation et une chambre d'expansion (7) et qui est parcourue par le fluide porteur de chaleur sans venir en contact direct avec le matériau d'accumulation, de manière telle que le fluide porteur de chaleur circule à travers un certain nombre de tubes (15) traversant l'enceinte intérieure (3), qui débouchent à chacune de leurs deux extrémités dans une chambre collectrice (8) et avec une enceinte extérieure (5) entourant l'enceinte intérieure (3) en formant une chambre isolante, qui est percée par une conduite d'arrivée et une conduite d'évacuation (11; 12), **caractérisé en ce qu'**il est prévu une ouverture (1) dans l'enceinte intérieure (3) et une autre ouverture (4) dans l'enceinte extérieure (5), qui sont reliées par une conduite (18), une soupape de limitation de pression (6) étant brasée directement dans l'ouverture (4), de manière telle que la diminution de la pression puisse se faire dans l'atmosphère.

9. Accumulateur de chaleur latente, se composant d'une enceinte intérieure (103), dans laquelle se trouvent le matériau d'accumulation et une chambre d'expansion (107) et qui est parcourue par le fluide porteur de chaleur sans venir en contact direct avec le matériau d'accumulation, de manière telle que le fluide porteur de chaleur circule à travers un certain nombre de tubes (15) traversant l'enceinte intérieure (103), qui débouchent à chacune de leurs deux extrémités dans une chambre collectrice (108) et avec une enceinte extérieure (105) entourant l'enceinte intérieure (103) en formant une chambre isolante, qui est percée par une conduite d'arrivée et une conduite d'évacuation (11; 12), **caractérisé en ce que**, dans une ouverture (101) de la paroi (102) de l'enceinte intérieure (103), est monté, de façon étanche et par une technique de jonction, un adaptateur (100) présentant un alésage (113), qui reprend de façon étanche la tubulure (121) de la soupape de limitation de pression (106) qui présente un alésage de passage (120), de manière telle que l'alésage de passage (120) et l'alésage (113) puissent être mis en communication hydraulique.

10. Accumulateur de chaleur latente suivant la revendication 9, **caractérisé en ce que** l'adaptateur (100) se trouve sur la face intérieure de l'enceinte et pénètre dans la chambre d'expansion (107) par l'extrémité (114) présentant un alésage (113), et **en ce que** l'adaptateur (100) possède une buselure (115) façonnée latéralement, dans laquelle débouche l'alésage (113) et qui est disposée dans l'ouverture (101) de la paroi (102), qui reprend la tubulure (121) de la soupape de limitation de pression (106) pénétrant dans la chambre collectrice (108).

11. Accumulateur de chaleur latente suivant les revendications 9 et 10, **caractérisé en ce que** la soupape de limitation de pression (106) présente, en périphérie de la tubulure (121), une rainure (122) avec un joint torique rond (123) et ensuite un bourrelet (124) qui sert d'une part de butée pour la buselure (115) et d'autre part de logement et de fixation d'un couvercle de soupape (127) entourant la coiffe de soupape (126) prévue sur l'autre extrémité (125) de la tubulure (121).

12. Accumulateur de chaleur latente suivant l'une quelconque des revendications précédentes 9 à 11, **caractérisé en ce que** la coiffe de soupape (126) en forme de cuvette composée d'un matériau de gomme élastique entoure l'extrémité (125) de la tubulure (121) avec l'alésage de passage (120) et **en ce que** le couvercle de soupape (127) est en forme de cuvette, présente des alésages radiaux (128) et que la coiffe de soupape (126) est fixée en s'accrochant sur le bourrelet (124).

13. Accumulateur de chaleur latente suivant l'une quelconque des revendications précédentes 9 à 12, **caractérisé en ce que** l'extrémité frontale (125) de la tubulure (121) présente un bord en débordement axial (130), et **en ce que** des canaux (135) disposés en étoile sont usinés dans la face intérieure (134) de la coiffe de soupape (126) formée d'un fond (132) et d'une surface latérale (133), canaux qui vont du centre jusqu'à un bourrelet annulaire (136) terminant la surface latérale (133).
